# EUROPEAN PATENT APPLICATION

(11) **EP 4 759 209 A1**
(43) Date of publication of application: **17.06.2026**
(21) Application number: 25155436.6
(22) Date of filing: 31.01.2025
(51) Int. Cl.: A47J 37/06

(54) **AIR FRYER**

(30) Priority: 13.12.2024 CN 202423090838 U
(71) Applicant: Ningbo Zhonghong Intelligent Technology Co., Ltd., Cixi Zhejiang 315318 (CN)
(72) Inventor: YANG, Qunhui, Cixi City, Zhejiang Province, 315318 (CN)
(74) Representative: Cabinet Chaillot

(57) **Abstract**

The present disclosure discloses an air fryer, comprising a fryer body and at least one hot air assembly; the fryer body comprises at least one cooking compartment; an air guide plate is disposed above each cooking compartment, and a mounting chamber is disposed above the air guide plate; the hot air assembly is disposed above the corresponding cooking compartments respectively; each hot air assembly comprises a motor, an electric heating element, a first fan and a second fan; the electric heating element is connected below the air guide plate; the first connection end penetrates down through the air guide plate to connect with the first fan below the air guide plate; the second connection end is connected with the second fan in the mounting chamber; and a first concave chamber which is inwardly concave and provided for the lower end of the motor to be inserted into is axially disposed in the center of the first fan, and the lower end of the motor is inserted into the first concave chamber; and/or, a second concave chamber which is inwardly concave and provided for the upper end of the motor to be inserted into is axially disposed in the center of the second fan, and the upper end of the motor is inserted into the second concave chamber. The air fryer having a structurally-compact hot air assembly with small thickness and volume.

## Description

### TECHNICAL FIELD

The present disclosure relates to the technical field of kitchen appliances and in particular to an air fryer.

### BACKGROUND

The air fryers are cooking devices which can heat an airflow rapidly with a heating element and enable the heated air flow to contact with foods by using a large-power fan so as to achieve frying effect on the foods. Because the foods prepared by the air fryers feature good taste, less oil and less harmful substances, the air fryers become very popular with the people. Therefore, the air fryers have been gradually accepted by common families and hence brought much convenience to the lives of the people.

In the related arts, the air fryers may comprise single-basket air fryers and double-basket air fryers. The single-basket air fryers have only one hot air assembly. In contrast, the double-basket air fryers, especially those double-basket air fryers with up-down double stack design usually have two hot air assemblies, and each hot air assembly comprises an electric heating element and a fan assembly. The electric heating element is usually an electric heating wire or an electric heating tube, and the fan assembly blows the heat generated by the electric heating element to a liner or a food cooking compartment to bake the foods.

In the related arts, the hot air assembly in the single-basket air fryer is disposed above the cooking compartment or on the top of the product as mentioned in the Chinese patent application with the publication number CN221330985U and the title of HOT AIR ASSEMBLY OF AIR FRYER AND AIR FRYER. In the application, an air guide plate, a vertically-disposed motor, a cold air fan and a hot air fan are disposed above a cooking compartment. The cold air fan and the hot air fan are axially and sequentially mounted on a vertical rotary shaft of the motor. The hot air fan is located below the air guide plate to blow a hot airflow to the cooking compartment, and the cold air fan is located above the air guide plate to dissipate heat for the motor. In the double-basket air fryer, in order to expand the space of the cooking compartment, the hot air assembly is usually disposed at a back side of or a side of the air fryer away from users and also comprises an air guide plate, a motor, a cold air fan and a hot air fan; a rotary shaft of the motor is horizontally disposed and the cold air fan and the hot air fan are axially and sequentially connected on the rotary shaft of the motor; and the cold air fan and the hot air fan are respectively located at both sides of the air guide plate, as mentioned in the prior application with the publication number of CN119055104A and the title of AIR FRYER, filed by the applicant of the present application.

The air fryers in the related arts have the following shortcomings in the practical production and use: the cold air fan and the hot air fan of the fan assembly are axially mounted at a side of the motor respectively and the electric heating element is mounted at an outer side of the hot air fan, which increases an entire thickness of the hot air assembly, leading to a larger entire height of the air fryer and to failure to put it within a height limited by a cupboard; in the double-basket air fryer, the fan assembly is disposed at the back side of the air fryer, leading to a longer air fryer; and when the air fryer is put into a cupboard, it may protrude out of the cupboard, affecting the use safety.

### SUMMARY

In order to overcome the above defects in the prior arts, the present disclosure provides an air fryer having a structurally-compact hot air assembly with small thickness and volume.

The present disclosure provides a technical solution in which there is provided an air fryer having the following structure, which comprises:
a fryer body, having at least one cooking compartment and an insertion opening being in communication with the cooking compartment and provided for a frying basket to be pushed into or pulled out of the cooking compartment; where an air guide plate is disposed above each cooking compartment, and a mounting chamber is disposed above the air guide plate;
at least one hot air assembly, disposed above the corresponding cooking compartments respectively; where each hot air assembly comprises a motor, an electric heating element, a first fan and a second fan; the electric heating element is connected below the air guide plate; the motor is connected inside the mounting chamber; a rotary shaft of the motor forms a first connection end at a lower end of the motor and forms a second connection end at an upper end of the motor; the first connection end penetrates down through the air guide plate to connect with the first fan below the air guide plate; the second connection end is connected with the second fan in the mounting chamber;
where a first concave chamber which is inwardly concave and provided for the lower end of the motor to be inserted into is axially disposed in the center of the first fan, and the lower end of the motor is inserted into the first concave chamber; and/or, a second concave chamber which is inwardly concave and provided for the upper end of the motor to be inserted into is axially disposed in the center of the second fan, and the upper end of the motor is inserted into the second concave chamber.

In some embodiments, the first concave chamber forms a columnar first protrusion portion below the first fan and a projection of fan blades of the first fan in a horizontal direction is on an outer sidewall of the first protrusion portion; and/or,
the second concave chamber forms a columnar second protrusion portion above the second fan and a projection of fan blades of the second fan in a horizontal direction is on an outer sidewall of the second protrusion portion.

In some embodiments, a lower edge of the horizontal projection of the fan blades of the first fan on the first protrusion portion is higher than a bottom end surface of the first protrusion portion; and/or,
an upper edge of the horizontal projection of the fan blades of the second fan on the second protrusion portion is lower than a top end surface of the second protrusion portion.

In some embodiments, an upwardly-concave flow guide groove is disposed in the center of the bottom of the air guide plate, the first fan and the electric heating element are both disposed in the flow guide groove, and the electric heating element is disposed at an outer edge of the first fan along a circumference of the first fan.

In some embodiments, a projection of the electric heating element in a horizontal direction is on an outer sidewall of the first fan.

In some embodiments, there are two cooking compartments which are sequentially distributed in a height direction of the fryer body; there are two hot air assemblies which are respectively connected to the tops of the two cooking compartments.

In some embodiments, a downwardly-concave accommodation groove is disposed at a side of the top of the fryer body close to users, and a control panel capable of extending out of or retracting into the accommodation groove is rotatably connected in the accommodation groove.

In some embodiments, a side of the control panel close to users is rotatably connected with an inner wall of the accommodation groove, a positioning tooth group circumferentially disposed around a rotation axis of the control panel is disposed on the control panel, and a positioning piece elastically snap-fitted to the positioning tooth group is connected in the accommodation groove.

In some embodiments, a plurality of heat dissipation windows in communication with the mounting chamber are disposed on the inner wall of the accommodation groove.

In some embodiments, a recess communicated with the accommodation groove and provided for a finger to be inserted into is disposed on the top of the fryer body.

In conclusion, compared with the related arts, the air fryer in the present disclosure has the following advantages: the hot air assembly of the air fryer is disposed above the cooking compartment; and the first concave chamber provided for the lower end of the motor to be inserted into is axially disposed in the center of the first fan of the hot air assembly and the lower end of the motor is inserted into the first concave chamber; and/or, the second concave chamber provided for the upper end of the motor to be inserted into is axially disposed in the center of the second fan, and the upper end of the motor is inserted into the second concave chamber. With this disposal, the first fan and the second fan are respectively connected at both ends of the motor or respectively located at both ends of the motor, and the first fan and/or the second fan are wrapped outside the motor, such that the first fan, the second fan and the motor are assembled together with a smaller entire height, making the structure of the hot air assembly more compact, and making its entire thickness smaller and the volume smaller. Therefore, the air fryer has a smaller entire height while maintaining the height of the cooking compartment unchanged, so as to fit a height limited by a cupboard, and satisfying the requirements of the users. Furthermore, the hot air assembly of the air fryer is disposed above the cooking compartment, so the length of the double-basket air fryer will not be increased due to the disposal of the hot air assembly, so as to fit a depth limited by a cupboard.

### BRIEF DESCRIPTIONS OF THE DRAWINGS

FIG. 1 is a structural schematic diagram illustrating an air fryer according to some embodiments of the present disclosure.
FIG. 2 is a structural schematic diagram illustrating a back side of an air fryer according to some embodiments of the present disclosure.
FIG. 3 is a schematic diagram illustrating an internal structure of an air fryer according to some embodiments of the present disclosure.
FIG. 4 is a stereoscopic diagram illustrating a sectional structure of an air fryer according to some embodiments of the present disclosure.
FIG. 5 is a structural schematic diagram illustrating a hot air assembly of an air fryer according to some embodiments of the present disclosure.
FIG. 6 is a schematic diagram illustrating a top structure of a hot air assembly of an air fryer according to some embodiments of the present disclosure.
FIG. 7 is a schematic diagram illustrating an assembling structure of a hot air assembly of an air fryer according to some embodiments of the present disclosure.
FIG. 8 is a schematic diagram illustrating an assembling structure of another angle of a hot air assembly of an air fryer according to some embodiments of the present disclosure.
FIG. 9 is a structural schematic diagram illustrating a fan assembly of an air fryer according to some embodiments of the present disclosure.
FIG. 10 is a schematic diagram illustrating a sectional structure of a fan assembly of an air fryer according to some embodiments of the present disclosure.
FIG. 11 is a schematic diagram illustrating a sectional structure of a hot air assembly of an air fryer according to some embodiments of the present disclosure.
FIG. 12 is a structural schematic diagram illustrating a fan assembly of an air fryer according to some embodiments of the present disclosure.
FIG. 13 is a schematic diagram illustrating a sectional structure of a fan assembly of an air fryer according to some embodiments of the present disclosure.
FIG. 14 is a structural schematic diagram illustrating a control panel of an air fryer according to some embodiments of the present disclosure.

Numerals of the drawings are described below:
1. fryer body, 100. cooking compartment, 101. insertion opening, 102. air guide plate, 103. mounting chamber, 104. heat dissipation hole, 105. accommodation groove, 106. heat dissipation window, 107. flow guide groove, 108. recess, 2. frying basket, 3. fan assembly, 300. motor, 301. first fan, 302. second fan, 303. first concave chamber, 304. first protrusion portion, 305. second concave chamber, 306. second protrusion portion, 307. first connection end, 308. second connection end, 4. electric heating element, 5. control panel, 500. rotary shaft, and 501. positioning tooth group.

### DETAILED DESCRIPTIONS OF EMBODIMENTS

The present disclosure will be further detailed below in combination with drawings and specific embodiments.

In the descriptions of embodiments of the present disclosure, it is understood that the orientation or positional relationship indicated by the terms such as "longitudinal", "transverse", "width", "thickness", "upper", "lower", "front", "rear", "vertical", "top" and "bottom" and the like is based on the orientation or positional relationship shown in the drawings and used only for ease of descriptions and simplification of descriptions and does not indicate or imply that the indicated devices or elements must have a particular orientation, or be constructed or operated in a particular orientation. Therefore, such terms shall not be understood as limiting of the present disclosure.

Furthermore, the terms "first" and "second" are used for descriptions only and shall not be understood as indicating or implying relative importance or implicitly indicating the number of the indicated features. As a result, the features defined by "first" and "second" may explicitly or implicitly include one or more of the features. In the descriptions of the present disclosure, the "several" refers to two or more, unless otherwise clearly stated.

In the present disclosure, unless otherwise clearly stated or defined, the terms "mount", "connect", "couple", and "fix" and the like shall be understood in a broad sense, for example, may be fixed connection, or detachable connection, or formed into one piece; or may be mechanical connection, or direct connection or indirect connection through an intermediate medium, or may be internal communication between two elements. Those skilled in the art may understand the specific meanings of the above terms in the present disclosure according to actual situations.

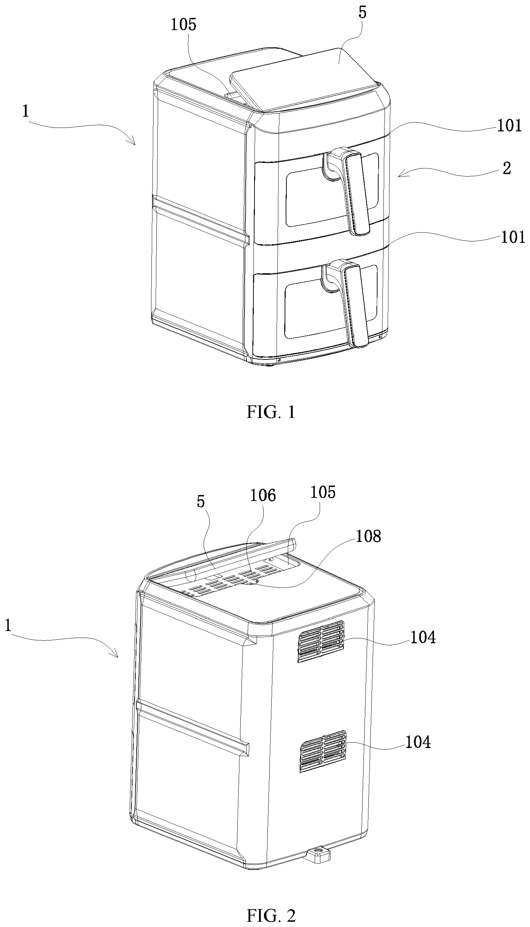

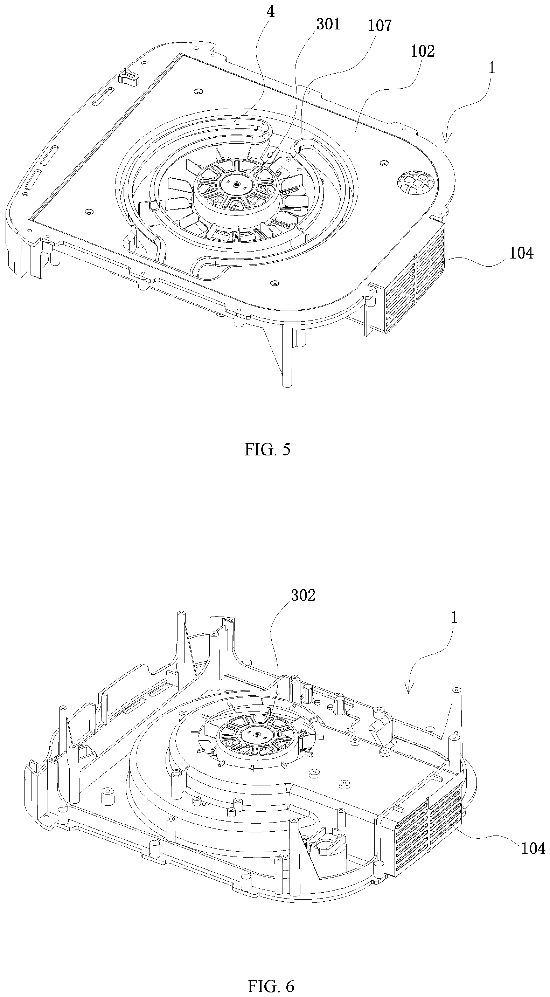

With reference to FIGS. 1 to 14, an embodiment of the present disclosure provides an air fryer, which structurally comprises a fryer body 1 and frying baskets 2. The fryer body 1 comprises a housing, an electric control unit connected to the housing, a control panel 5, and a liner connected in the housing. The fryer body 1 comprises at least one cooking compartment 100, and the cooking compartments 100 are formed in a space defined by the liner. Insertion openings 101 which are in communication with respective cooking compartments 100 and provided for the frying baskets 2 to be pushed into or pulled out of the cooking compartments 100 are disposed at a user side of the fryer body 1, and the insertion openings 101 match in number with the cooking compartments 100. At least one hot air assembly corresponding to the cooking compartments 100 is connected in the fryer body 1, namely, one cooking compartment 100 corresponds to one hot air assembly.

With reference to FIGS. 1, 2, 3 and 4, there are two cooking compartments 100 in the air fryer of the embodiment, which are sequentially distributed in a height direction of the fryer body 1; there are two hot air assemblies which are respectively connected to the tops of the two cooking compartments 100. In the embodiment, the air fryer is a double-basket air fryer with up-down double stack design. The hot air assembly in middle divides the liner in the housing into upper and lower cooking compartments 100 which are independent of each other. The hot air assembly above the upper cooking compartment 100 bakes foods in the upper cooking compartment 100 whereas the hot air assembly above the lower cooking compartment 100 bakes foods in the lower cooking compartment 100.

In other embodiments, there may be three cooking compartments or four cooking compartments or the like, which are distributed in a height direction of the fryer body. Similarly, in other embodiments, the air fryer may also be a single-basket air fryer or a three-basket air fryer. The single-basket air fryer only comprises one cooking compartment, one frying basket and one hot air assembly and the like, and the three-basket air fryer may also comprise three cooking compartments, three frying baskets and three hot air assemblies.

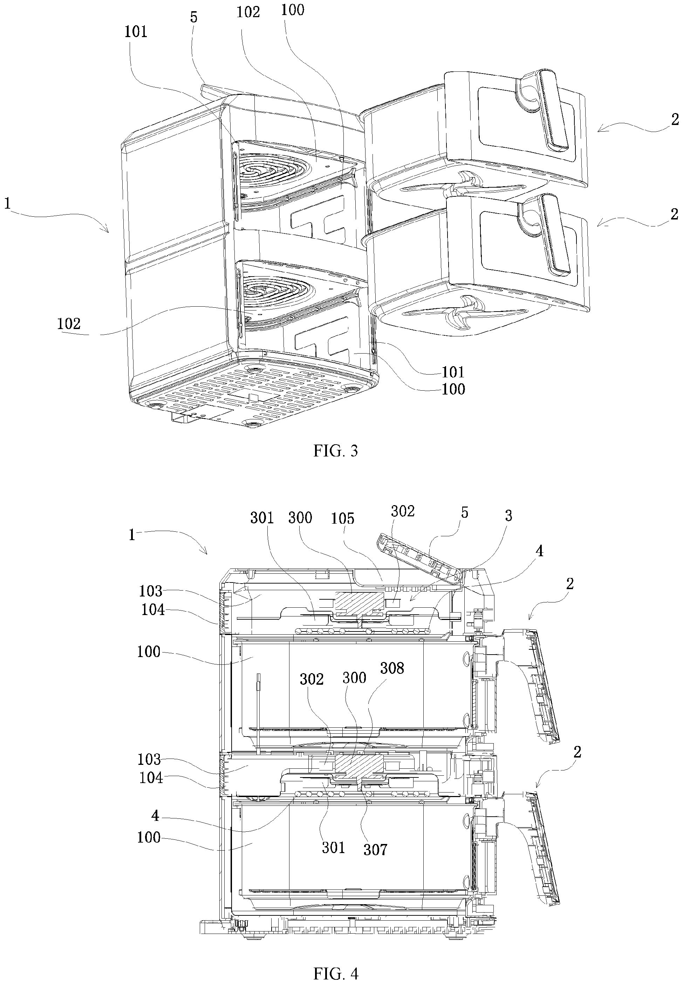

In this embodiment, an air guide plate 102 is disposed above each cooking compartment 100 and a mounting chamber 103 is disposed above the air guide plate 102, and the mounting chamber 103 is in communication with heat dissipation holes 104 on the housing. With reference to FIGS. 3, 4, 5, 6, 7 and 8, the hot air assembly is disposed above each of the cooking compartments 100 and each hot air assembly comprises an electric heating element 4 and a fan assembly 3. The electric heating element 4 is an electric heating tube or electric heating wire. The electric heating element 4 is connected to the air guide plate 102 and below the air guide plate 102. When an airflow runs through the electric heating element 4, the airflow is heated to generate a hot airflow for baking foods. The fan assembly 3 comprises a motor 300, a first fan 301 and a second fan 302. The motor 300 is connected in the mounting chamber 103 and a rotary shaft of the motor 300 is vertically disposed. The rotary shaft of the motor 300 forms a first connection end 307 at a lower end of the motor 300 and forms a second connection end 308 at an upper end of the motor 300. The first connection end 307 penetrates down through the air guide plate 102 to connect with the first fan 301 below the air guide plate 102, and the second connection end 308 is connected with the second fan 302 in the mounting chamber 103. The first fan 301 is configured to diffuse the hot air generated by the electric heating element 4 into the cooking compartment 100 to bake foods. Therefore, the first fan 301 is also referred to as hot air fan. The second fan 302 is configured to diffuse out the heat generated by the motor 300 through the heat dissipation holes 104 on the back side of the housing. Therefore, the second fan 302 is also referred to as cold air fan or heat dissipation fan. When the rotary shaft of the motor 300 rotates, the first fan 301 and the second fan 302 rotate at the same time.

It can be understood that the hot air assembly is disposed above the cooking compartment 100 or on the top of the cooking compartment 100, and a thickness of the hot air assembly directly affects the entire height of the air fryer. In other words, in a case of a height of the cooking compartment 100 unchanged, the larger the thickness of the hot air assembly is, the larger the entire height of the air fryer is; and the smaller the thickness of the hot air assembly is, the smaller the entire height of the air fryer is. The thickness of the hot air assembly is a sum of heights of the motor 300, the first fan 301, the second fan 302, the air guide plate 102, the electric heating element 4 and the mounting chamber 103 distributed in an axial direction of the motor 300.

It can be easily known that the height of the fan assembly 3 in the hot air assembly directly affects the thickness of the hot air assembly especially for a double-basket air fryer with up-down double stack in which there are two fan assemblies 3 distributed in a height direction of the air fryer. Therefore, in this embodiment, in order to reduce the thickness of the hot air assembly, the entire height of the fan assembly 3 is reduced. Specifically, with reference to FIGS. 4 to 11, a first concave chamber 303 which is inwardly concave and provided for the lower end of the motor 300 to be inserted into is axially disposed in the center of the first fan 301, and the lower end of the motor 300 is inserted into the first concave chamber 303; and/or, a second concave chamber 305 which is inwardly concave and provided for the upper end of the motor 300 to be inserted into is axially disposed in the center of the second fan 302, and the upper end of the motor 300 is inserted into the second concave chamber 305. In this embodiment, a concave chamber for an end of the motor 300 to be inserted into is disposed in the center of the first fan 301, or a concave chamber for an end of the motor 300 to be inserted into is disposed in the center of the second fan 302, or concave chambers for two ends of the motor 300 to be inserted into are respectively disposed in the centers of the first fan 301 and the second fan 302.

Specifically, in this embodiment, with reference to FIGS. 4, and 7 to 11, the first concave chamber 303 and the second concave chamber 305 provided for both ends of the motor 300 to be inserted into are respectively disposed in the centers of the first fan 301 and the second fan 302, such that the entire height of the fan assembly 3 can be reduced. It can be understood that, compared with the solution in which the two fans are axially and sequentially assembled at one end of the rotary shaft of the motor 300 and the entire height of the fan assembly 3 is the sum of the heights of the above three, in this embodiment, the first fan 301 and the second fan 302 are respectively connected to both ends of the motor 300 or respectively located at both ends of the motor 300, and the ends of the motor 300 are inserted into the concave chambers in the centers of the fans, or the first fan 301 and/or the second fan 302 are wrapped outside the motor 300 such that the first fan 301, the second fan 302 and the motor 300 are assembled together with a smaller entire height, making the structure of the hot air assembly more compact, and making its entire thickness smaller and volume smaller. Therefore, the air fryer has a smaller entire height while maintaining the height of the cooking compartment 100 unchanged, so as to fit a height limited by a cupboard, and satisfying the requirements of the users. Furthermore, the hot air assembly of the air fryer is disposed above the cooking compartment 100, so the length of the double-basket air fryer will not be increased due to the disposal of the hot air assembly, so as to fit a depth limited by a cupboard.

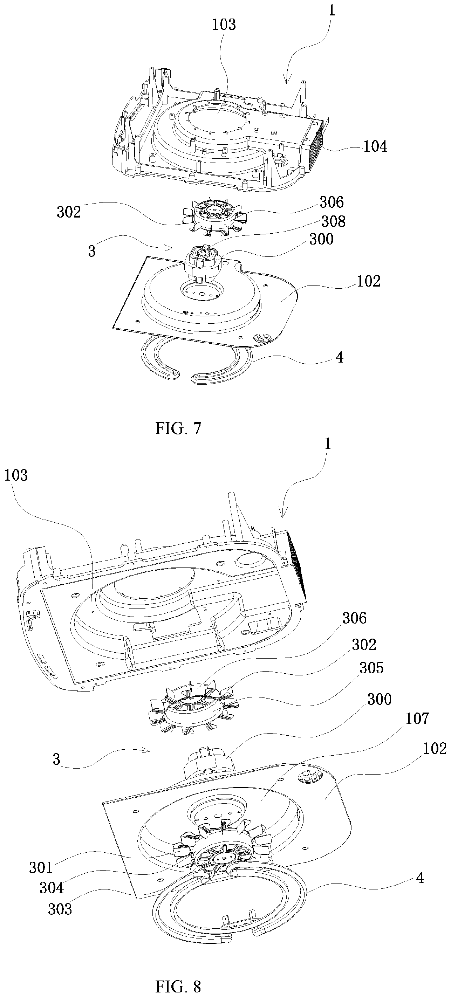

Furthermore, in the embodiment, with reference to FIGS. 7 to 11, the first concave chamber 303 forms a columnar first protrusion portion 304 below the first fan 301 and a projection of fan blades of the first fan 301 in a horizontal direction is on an outer sidewall of the first protrusion portion 304; the second concave chamber 305 forms a columnar second protrusion portion 306 above the second fan 302 and a projection of fan blades of the second fan 302 in a horizontal direction is on an outer sidewall of the second protrusion portion 306. In other words, the first protrusion portion 304 protrudes down in an axial direction of the first fan 301 such that the fan blades of the first fan 301 are on an upper end of the first protrusion portion 304, where the height of the first protrusion portion 304 is greater than or equal to the height of the fan blades of the first fan 301; the second protrusion portion 306 protrudes upward in an axial direction of the second fan 302 such that the fan blades of the second fan 302 are on a lower end of the second protrusion portion 306, where the height of the second protrusion portion 306 is greater than or equal to the height of the fan blades of the second fan 302. In this embodiment, the upper end and the lower end of the first protrusion portion 304 and the upper end and the lower end of the second protrusion portion 306 are all based on the up-down direction indicated in the drawings or the up-down direction indicated for use of the air fryer. In this disposal, the fan blades of the first fan 301 and the fan blades of the second fan 302 are both closer to the center of the motor 300, reducing the entire height of the fan assembly 3.

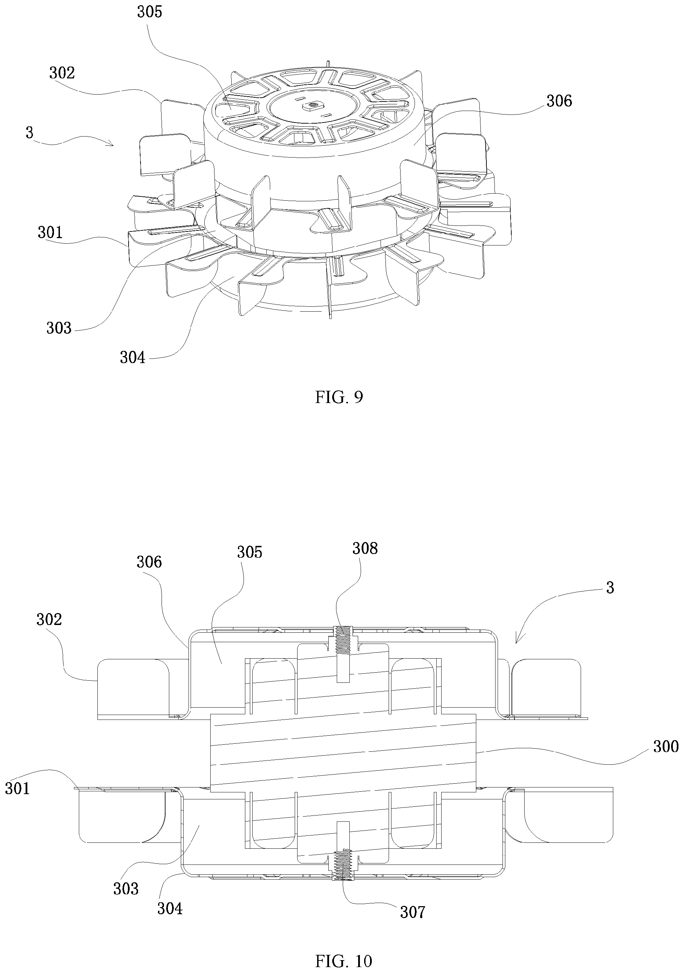

In a preferred implementation of the present embodiment, with reference to FIGS. 9 to 11, a lower edge of the horizontal projection of the fan blades of the first fan 301 on the first protrusion portion 304 is higher than a bottom end surface of the first protrusion portion 304; and/or, an upper edge of the horizontal projection of the fan blades of the second fan 302 on the second protrusion portion 306 is lower than a top end surface of the second protrusion portion 306. The lower edge of the horizontal projection of the fan blades of the first fan 301 on the first protrusion portion 304 is higher than the bottom end surface of the first protrusion portion 304, that is, the height of the first protrusion portion 304 is greater than the height of the fan blades of the first fan 301, such that the fan blades of the first fan 301 are closer to the center of the motor 300. Similarly, the fan blades of the second fan 302 are also closer to the center of the motor 300. With this disposal, a larger space is reserved for the mounting of the electric heating element 4 and the first fan 301 and the electric heating element 4 can assembled together with a smaller entire thickness, further reducing the thickness of the hot air assembly. Furthermore, the fan blades of the second fan 302 are closer to the center of the motor 300, reducing the entire height of the mounting chamber 103 and making the entire height of the air fryer smaller.

In the above embodiment, it can be understood that both ends of the rotary shaft of the motor 300 axially protrude out of two end surfaces of the motor 300 respectively so as to form the first connection end 307 connected with the first fan 301 and the second connection end 308 connected with the second fan 302. Each fan is integrally formed by pressing a metal plate, the concave chamber in the protrusion portion is provided for insertion of the end of the motor 300 and the fan blades of the fan are connected with one end of the protrusion portion. When the fans are assembled to the rotary shaft of the motor 300, an end of the fans is inserted into the concave chambers in the corresponding protrusion portions, and the protrusion portions are wrapped outside the motor 300, and the fan blades of the fan on one end of each protrusion portion are closer to the center of the motor 300 or the projection of the fan blades of each fan in a horizontal direction is fully on the outer sidewall of the motor 300.

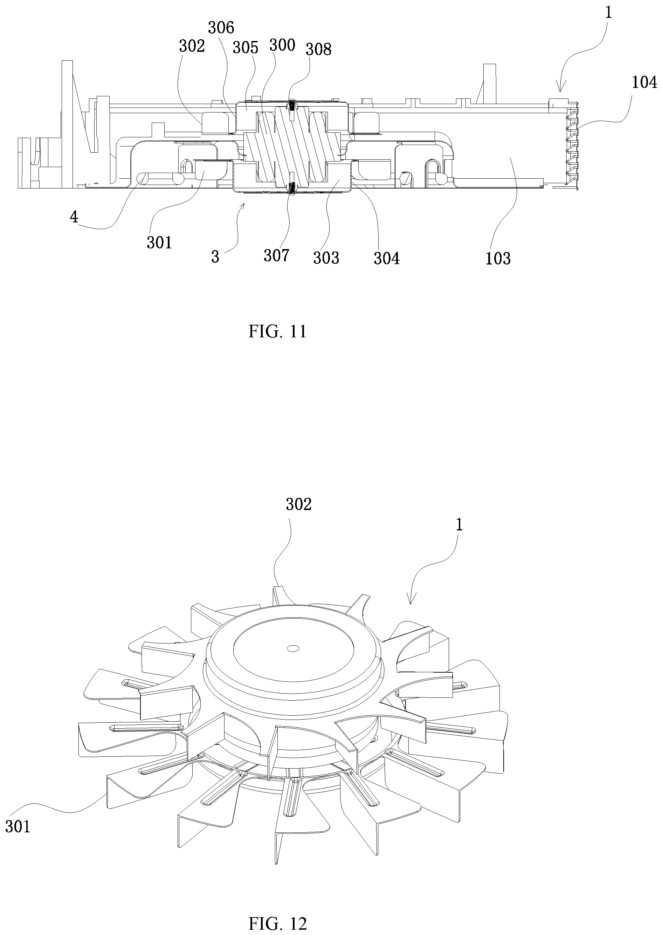

In this embodiment, in order to further reduce the entire thickness of the hot air assembly, with reference to FIGS. 8 and 11, an upwardly-concave flow guide groove 107 is disposed in the center of the bottom of the air guide plate 102, and the first fan 301 and the electric heating element 4 are both disposed in the flow guide groove 107. The electric heating element 4 is disposed at an edge of the first fan 301 along a circumference of the first fan 301. With this disposal, the increase of the axial thickness of the electric heating element 4 and the first fan 301 can be avoided, that is, in this embodiment, the electric heating element 4 is disposed in the flow guide groove 107 of the air guide plate 102 and located outside the first protrusion portion 304 of the first fan 301. Therefore, the entire thickness of the hot air assembly can be further reduced, making the entire height of the air fryer smaller.

Furthermore, in the above embodiment, the projection of the electric heating element 4 in a horizontal direction is on the outer sidewall of the first fan 301, that is, the height of the bottom of the electric heating element 4 is higher than or equal to the height of the lower end of the first protrusion portion 304. In this case, the axial thickness of the electric heating element 4 and the first fan 301 can be further reduced.

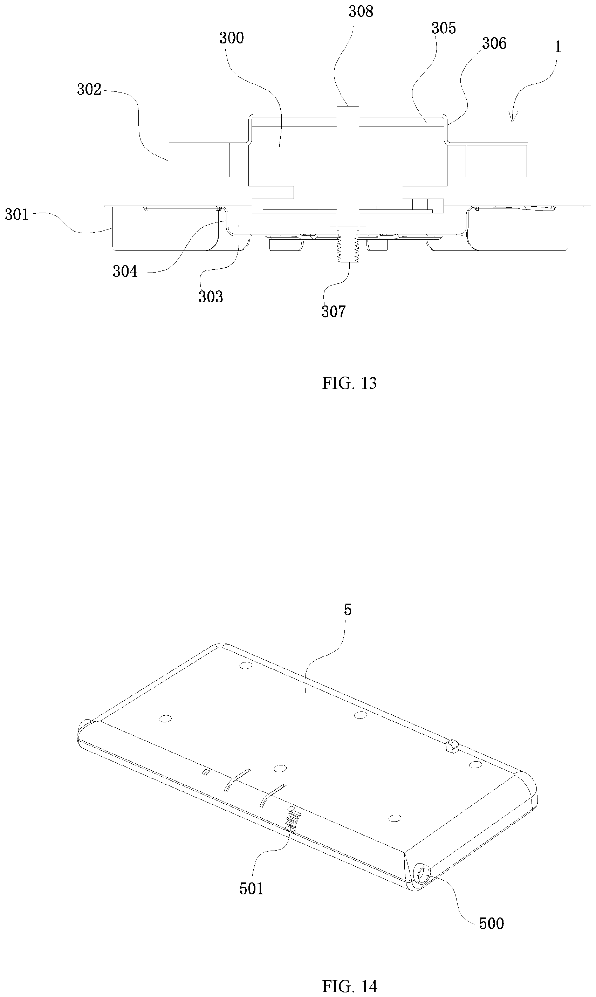

In the above embodiment, the motor of the fan assembly is an alternating current motor. With reference to FIGS. 12 and 13, the motor of the fan assembly can also be a direct current motor.

In some embodiments, with reference to FIGS. 1, 2 and 14, a downwardly-concave accommodation groove 105 is disposed at a side of the top of the fryer body 1 close to user, and a control panel 5 capable of extending out of or retracting into the accommodation groove 105 is rotatably connected in the accommodation groove 105. The control panel 5 is electrically connected with an electric control unit in the air fryer to control the operation of the air fryer. The user only needs to stand before the air fryer and rotate the control panel to a proper angle of inclination to enable an operation interface of the control panel 5 to exactly face toward the eyes of the user, thereby operating the control panel without bending down or lowering head. Therefore, the control panel 5 of the air fryer is easy and convenient to operate, bringing good experience to the user. Moreover, the control panel 5 can be retracted into the accommodation groove 105 on the top of the fryer body 1, facilitating packaging and transportation and avoiding damage.

In the above embodiment, a side of the control panel 5 close to user is rotatably connected with an inner wall of the accommodation groove 105 by a rotation shaft 500; a positioning tooth group 501 circumferentially arranged around an axis of the rotation shaft 500 of the control panel 5 is disposed on the control panel 5; and a positioning piece elastically snap-fitted to the positioning tooth group 501 is connected in the accommodation groove 105. The positioning piece can be an arc-shaped protrusion integrally formed in the accommodation groove 105 or an elastic pin mounted in the accommodation groove 105. When the control panel 5 rotates, because the positioning piece is elastically snap-fitted to the positioning tooth group 501, the control panel 5 can be rotated to an angle and maintained at this angle.

In some embodiments, with reference to FIG. 2, multiple heat dissipation windows 106 in communication with the mounting chamber 103 are disposed on an inner wall of the accommodation groove 105. When the control panel 5 is rotated out of the accommodation groove 105, the heat dissipation windows 106 can be opened. Thus, the heat dissipation of the motor 300 in the mounting chamber 103 of the air fryer can be accelerated and the heat of the motor 300 in the mounting chamber 103 also will not affect the control panel 5.

In some embodiments, in order to help the control panel 5 to rotate out of the accommodation groove 105, with reference to FIG. 2, a recess 108 communicated with the accommodation groove 105 and provided for a finger to be inserted into is disposed on the top of the fryer body 1. When the control panel 5 is to be rotated, the control panel 5 can be easily rotated out of the accommodation groove 105 by inserting a finger into the recess 108, bringing simple and convenient operation and saving labor.

In the descriptions of the specification, the descriptions made by referring to the terms such as "one embodiment", "some embodiments", "example", "specific examples" or "some examples" or the like are meant to refer to that the specific features, structures, materials or characteristics described in combination with the embodiments or examples are included in at least one embodiment or example of the present disclosure. In the present specification, the illustrative expressions for the above terms do not necessarily refer to same embodiment or example. Furthermore, the described specific features, structures, materials or characteristics can be combined in a proper way in any one or more embodiments or examples.

The above descriptions are only specific embodiments of the present disclosure and the scope of protection of the present disclosure is not limited hereto. Any changes or substitutions easily conceived of by those skilled in the arts within the technical scope of the present disclosure shall all fall within the scope of protection of the present disclosure. Therefore, the scope of protection of the present disclosure shall be indicated by the scope of protection of the claims.

## Claims

1. An air fryer, wherein it comprises:
a fryer body, having at least one cooking compartment and an insertion opening being in communication with the cooking compartment and provided for a frying basket to be pushed into or pulled out of the cooking compartment; an air guide plate is disposed above each cooking compartment, and a mounting chamber is disposed above the air guide plate;
at least one hot air assembly, disposed above the corresponding cooking compartments respectively; each hot air assembly comprises a motor, an electric heating element, a first fan and a second fan; the electric heating element is connected below the air guide plate; the motor is connected inside the mounting chamber; a rotary shaft of the motor forms a first connection end at a lower end of the motor and forms a second connection end at an upper end of the motor; the first connection end penetrates down through the air guide plate to connect with the first fan below the air guide plate; the second connection end is connected with the second fan in the mounting chamber; and
a first concave chamber which is inwardly concave and provided for the lower end of the motor to be inserted into is axially disposed in the center of the first fan, and the lower end of the motor is inserted into the first concave chamber; and/or, a second concave chamber which is inwardly concave and provided for the upper end of the motor to be inserted into is axially disposed in the center of the second fan, and the upper end of the motor is inserted into the second concave chamber.

2. The air fryer of claim 1, wherein the first concave chamber forms a columnar first protrusion portion below the first fan and a projection of fan blades of the first fan in a horizontal direction is on an outer sidewall of the first protrusion portion; and/or,
the second concave chamber forms a columnar second protrusion portion above the second fan and a projection of fan blades of the second fan in a horizontal direction is on an outer sidewall of the second protrusion portion.

3. The air fryer of claim 2, wherein a lower edge of the horizontal projection of the fan blades of the first fan on the first protrusion portion is higher than a bottom end surface of the first protrusion portion; and/or,
an upper edge of the horizontal projection of the fan blades of the second fan on the second protrusion portion is lower than a top end surface of the second protrusion portion.

4. The air fryer of any one claim of claims 1-3, wherein an upwardly-concave flow guide groove is disposed in the center of the bottom of the air guide plate, the first fan and the electric heating element are both disposed in the flow guide groove, and the electric heating element is disposed at an outer edge of the first fan along a circumference of the first fan.

5. The air fryer of claim 4, wherein a projection of the electric heating element in a horizontal direction is on an outer sidewall of the first fan.

6. The air fryer of any one claim of claims 1-3, wherein there are two cooking compartments which are sequentially distributed in a height direction of the fryer body; there are two hot air assemblies which are respectively connected to the tops of the two cooking compartments.

7. The air fryer of claim 6, wherein a downwardly-concave accommodation groove is disposed at a side of the top of the fryer body close to users, and a control panel capable of extending out of or retracting into the accommodation groove is rotatably connected in the accommodation groove.

8. The air fryer of claim 7, wherein a side of the control panel close to users is rotatably connected with an inner wall of the accommodation groove, a positioning tooth group circumferentially disposed around a rotation axis of the control panel is disposed on the control panel, and a positioning piece elastically snap-fitted to the positioning tooth group is connected in the accommodation groove.

9. The air fryer of claim 7, wherein a plurality of heat dissipation windows in communication with the mounting chamber are disposed on the inner wall of the accommodation groove.

10. The air fryer of claim 7, wherein a recess communicated with the accommodation groove and provided for a finger to be inserted into is disposed on the top of the fryer body.

## Amended claims

### Amended claims in accordance with Rule 137(2) EPC.

1. An air fryer, wherein it comprises:
a fryer body (1), having at least one cooking compartment (100) and an insertion opening (101) being in communication with the cooking compartment (100) and provided for a frying basket (2) to be pushed into or pulled out of the cooking compartment (100); an air guide plate (102) is disposed above each cooking compartment (100), and a mounting chamber (103) is disposed above the air guide plate (102);
**characterized in that** it includes:
at least one hot air assembly, disposed above the corresponding cooking compartments (100) respectively; each hot air assembly comprises a motor (300), an electric heating element (4), a first fan (301) and a second fan (302); the electric heating element (4) is connected below the air guide plate (102); the motor (300) is connected inside the mounting chamber (103); a rotary shaft (500) of the motor (300) forms a first connection end (307) at a lower end of the motor (300) and forms a second connection end (308) at an upper end of the motor (300); the first connection end (307) penetrates down through the air guide plate (102) to connect with the first fan (301) below the air guide plate (102); the second connection end (308) is connected with the second fan (302) in the mounting chamber (103); and
a first concave chamber (303) which is inwardly concave and provided for the lower end of the motor (300) to be inserted into is axially disposed in the center of the first fan (301), and the lower end of the motor (300) is inserted into the first concave chamber (303); and/or, a second concave chamber (305) which is inwardly concave and provided for the upper end of the motor (300) to be inserted into is axially disposed in the center of the second fan (302), and the upper end of the motor (300) is inserted into the second concave chamber (303);
there are two cooking compartments (100) which are sequentially distributed in a height direction of the fryer body (1), and there are two hot air assemblies which are respectively connected to the tops of the two cooking compartments (100);
a downwardly-concave accommodation groove (105) is disposed at a side of the top of the fryer body (1) close to users, and a control panel (5) capable of extending out of or retracting into the accommodation groove (105) is rotatably connected in the accommodation groove (105); and
a plurality of heat dissipation windows (106) in communication with the mounting chamber (103) are disposed on the inner wall of the accommodation groove (105).

2. The air fryer of claim 1, wherein the first concave chamber (303) forms a columnar first protrusion portion (304) below the first fan (301) and a projection of fan blades of the first fan (301) in a horizontal direction is on an outer sidewall of the first protrusion portion (304); and/or,
the second concave chamber (305) forms a columnar second protrusion portion (306) above the second fan (302) and a projection of fan blades of the second fan (302) in a horizontal direction is on an outer sidewall of the second protrusion portion (306).

3. The air fryer of claim 2, wherein a lower edge of the horizontal projection of the fan blades of the first fan (301) on the first protrusion portion (304) is higher than a bottom end surface of the first protrusion portion (304); and/or,
an upper edge of the horizontal projection of the fan blades of the second fan (302) on the second protrusion portion (306) is lower than a top end surface of the second protrusion portion (306).

4. The air fryer of any one claim of claims 1-3, wherein an upwardly-concave flow guide groove (107) is disposed in the center of the bottom of the air guide plate (102), the first fan (301) and the electric heating element (4) are both disposed in the flow guide groove (107), and the electric heating element (4) is disposed at an outer edge of the first fan (301) along a circumference of the first fan (301).

5. The air fryer of claim 4, wherein a projection of the electric heating element (4) in a horizontal direction is on an outer sidewall of the first fan (301).

6. The air fryer of claim 1, wherein a side of the control panel (5) close to users is rotatably connected with an inner wall of the accommodation groove (105), a positioning tooth group (501) circumferentially disposed around a rotation axis of the control panel (5) is disposed on the control panel (5), and a positioning piece elastically snap-fitted to the positioning tooth group (501) is connected in the accommodation groove (107).

7. The air fryer of claim 1, wherein a recess (108) communicated with the accommodation groove (107) and provided for a finger to be inserted into is disposed on the top of the fryer body (1).
